Europäisches Patentamt

European Patent Office

Office européen des brevets

(19)

(11) Veröffentlichungsnummer: **0 136 611**
**A2**

(12) **EUROPÄISCHE PATENTANMELDUNG**

(21) Anmeldenummer: 84111034.9

(22) Anmeldetag: 15.09.84

(51) Int. Cl.⁴: **F 24 H 1/16**

(30) Priorität: 01.10.83 DE 8328227 U

(43) Veröffentlichungstag der Anmeldung:
10.04.85 Patentblatt 85/15

(84) Benannte Vertragsstaaten:
AT BE CH DE FR GB IT LI LU NL SE

(71) Anmelder: Klöckner GEFI KG Industrielle Wärmetechnik
Blumentalstrasse 164/166
D-4150 Krefeld(DE)

(72) Erfinder: Engelhardt, Rolf Dieter
Grachtweg 1
D-5137 Waldfeucht(DE)

(74) Vertreter: Stark, Walter, Dr.-Ing.
Moerser Strasse 140
D-4150 Krefeld(DE)

(54) Durchlauferhitzer zur Erwärmung von Flüssigkeiten.

(57) Die Erfindung betrifft einen Durchlauferhitzer zur Erwärmung von Flüssigkeiten mit Hilfe von Verbrennungsabgasen, bestehend aus einem Gehäuse mit Mantel, Boden und
Deckel, mit wenigstens einer im Bereich des Mantels spiralförmig verlegten Rohrheizschlange für die Flüssigkeit, sowie
mit einem im Bodenbereich angeordneten Brenner, dem
vorgewärmte Verbrennungsluft zugeführt wird. Um die
Nutzung der Abgaswärme zu verbessern und gleichzeitig
den apparativen Aufwand zu verringern, soll das Gehäuse in
einer als Luftvorwärmer dienenden Haube angeordnet sein,
die oberhalb des Deckels einen Lufteinlaß und im Bereich
des Bodens einen Luftauslaß für die vorgewärmte, dem
Brenner zuzuführende Verbrennungsluft aufweist.

EP 0 136 611 A2

./...

# Dr.-Ing. WALTER STARK

## PATENTANWALT

**0136611**

Moerser Straße 140    D-4150 Krefeld 1    ☎ (02151) 28222 u. 20469    🆇 853578

Klöckner GEFI KG Industrielle Wärmetechnik
Blumentalstr. 164, 4150 Krefeld

Durchlauferhitzer zur Erwärmung von Flüssigkeiten

Die Erfindung betrifft einen Durchlauferhitzer zur
Erwärmung von Flüssigkeiten mit Hilfe von Verbrennungsabgasen, bestehend aus einem Gehäuse mit Mantel,
Boden und Deckel, mit wenigstens einer im Bereich
des Mantels spiralförmig verlegten Rohrheizschlange
für die Flüssigkeit sowie mit einem im Bodenbereich
angeordneten Brenner, dem vorgewärmte Verbrennungsluft zugeführt wird.

Durchlauferhitzer zur Erwärmung von Flüssigkeiten
sind in verschiedenen Ausführungen bekannt. Um eine
befriedigende Energieausnutzung zu erzielen, werden
sie in der Regel zusammen mit einem separaten Luftvorwärmer betrieben, der auf einer eigenen Bühne
mit einem eigenen Fundament installiert ist und mit
Kanälen für Verbrennungsabgase einerseits sowie die
vorzuwärmende Verbrennungsluft andererseits an den
Durchlauferhitzer angeschlossen ist. Die Verbrennungsluft wird mit einem Ventilator durch den Luftvorwärmer angesaugt und dem Brenner zugeführt. Das alles
erfordert zusätzlichen apparativen Aufwand, unter
anderem auch einen Ansaugschalldämpfer für den Ventilator
und Wärmeisolierungen der einzelnen Bauteile.

● Bank AG Krefeld 103/1525 BLZ 32070080  ·  Sparkasse Krefeld 305722 BLZ 32050000  ·  Postscheck Essen 4055-431 BLZ 36010043

0136611

- 2 -

Der Erfindung liegt die Aufgabe zugrunde, bei einem
Durchlauferhitzer der eingangs beschriebenen Gattung
die Nutzung der Abgaswärme zu verbessern und gleichzeitig den apparativen Aufwand zu verringern.

Diese Aufgabe wird dadurch gelöst, daß das Gehäuse
in einer als Luftvorwärmer dienenden Haube angeordnet
ist, die oberhalb des Deckels einen Lufteinlaß und
im Bereich des Bodens einen Luftauslaß für die vorgewärmte, dem Brenner zuzuführende Verbrennungsluft
aufweist.

Beim Betrieb dieses Durchlauferhitzers kann zunächst
auf einen separaten Luftvorwärmer mit Stahlgerüst,
Bühne und eigenem Fundament sowie mit verbindenden
Verbrennungsabgas- und Verbrennungsluftkanälen, Kompensatoren, Aufhängungen, Auflagerungen, Formstücken
und dergleichen verzichtet werden. Daraus resultieren
ein wesentlich kleinerer Platzbedarf sowie ein geringerer Aufwand für Transport und Montage. Hinzu kommen
Vorteile bei der Betreuung und Wartung. Bei diesem
Durchlauferhitzer strömt die zu erwärmende Flüssigkeit durch die Rohrheizschlange, die im Bereich des
Mantels spiralförmig verlegt ist. Insbesondere kann
es sich dabei um eine Rohrheizschlange mit dicht
an dicht verlegten Windungen handeln. Die durch die
Rohrheizschlange strömende Flüssigkeit wird hauptsächlich durch Strahlung der Verbrennungsabgase aufgeheizt.
Die Verbrennungsabgase strömen vom Boden des Gehäuses
in Richtung auf den Deckel. Im Gegenstrom dazu wird
die Verbrennungsluft geführt, deren Lufteinlaß nach
bevorzugter Ausführung der Erfindung über dem Zentrum
des Deckels angeordnet ist, so daß oberhalb des Deckels

0136611

- 3 -

eine erste Luftvorwärmerzone entsteht, in der die
vorzuwärmende Verbrennungsluft so weit vorgewärmt
und aufgeheizt wird, daß sie auf ihrem weiteren Weg
zwischen Haube und Gehäuse bereits eine Temperatur
hat, die auch Teillastbetrieb eine unzulässige Unterkühlung der von den Verbrennungsabgasen beaufschlagten
Flächen ausschließt.

Um die Strömung der Verbrennungsluft beim Eintritt
in die Haube zu verbessern, kann der Deckel aus einem
zum Lufteinlaß hin gewölbten Blech bestehen, das
gleichzeitig auch als Führung für die Verbrennungsluft
zu einem zwischen Haube und Mantel gebildeten Ringraum
übernimmt. Die durch den Ringraum strömende Verbrennungsluft wird innerhalb des Ringraums in einer dort
gebildeten zweiten Luftvorwärmerzone hauptsächlich
durch Konvektion weiter erwärmt. Im Ringraum können
luftführende Einbauten angeordnet sein, insbesondere
Rohre, die sich in Längsrichtung des Mantels erstrecken.

Die Verbrennungsabgase verlassen das Gehäuse durch
einen im Bereich des Deckels angeordneten und die
Haube durchdringenden Auslasses. Damit ist ein Gegenstromprinzip verwirklicht, welches sicherstellt,
daß eine maximale Ausnutzung der Verbrennungsabgaswärme bei geringstem apparativem Aufwand und bei
kleinem Raumbedarf erreicht wird.

Die Verhältnisse werden noch verbessert, wenn zwei
konzentrisch zueinander angeordnete spiralförmige
Rohrheizschlangen angeordnet sind, die im Bereich
des Deckels aneinander angeschlossen sind, wobei
Einlaß und Auslaß für die Flüssigkeit im Bereich

- 4 -

des Bodens angeordnet sind. Dann wird die durch die
äußere Rohrheizschlange strömende Flüssigkeit zunächst
durch Konvektion erwärmt, bevor sie in die innere
Rohrheizschlange eintritt und dort der direkten Strahlung der Verbrennungsabgase ausgesetzt ist.

Bei dem erfindungsgemäßen Durchlauferhitzer kann
wegen der direkten Kühlung des oberen Feuerraumendes
im Bereich des Deckels sowie auch in anderen Bereichen
auf die sonst erforderliche Auskleidung mit feuerfesten Materialien verzichtet werden. Damit wird
auch eine unerwünschte Nacherhitzung, insbesondere
von organischen Flüssigkeiten, bei Unterbrechung
der Strömung vermieden. Außerdem umgeht man die bekannten Schwierigkeiten mit Ausmauerungen (z.B. Montage-
und Transportprobleme, Rißbildungen, Erosionen, Wärmeausdehnungsunterschiede und dgl.).

Auch auf einen Ansaugschalldämpfer für den Ventilator,
der dem Brenner die vorgewärmte Verbrennungsluft
zuführt, kann verzichtet werden, weil der Luftweg
der Verbrennungsluft durch den Zwischenraum zwischen
Haube und Gehäuse bereits als Ansaugschalldämpfer
wirkt.

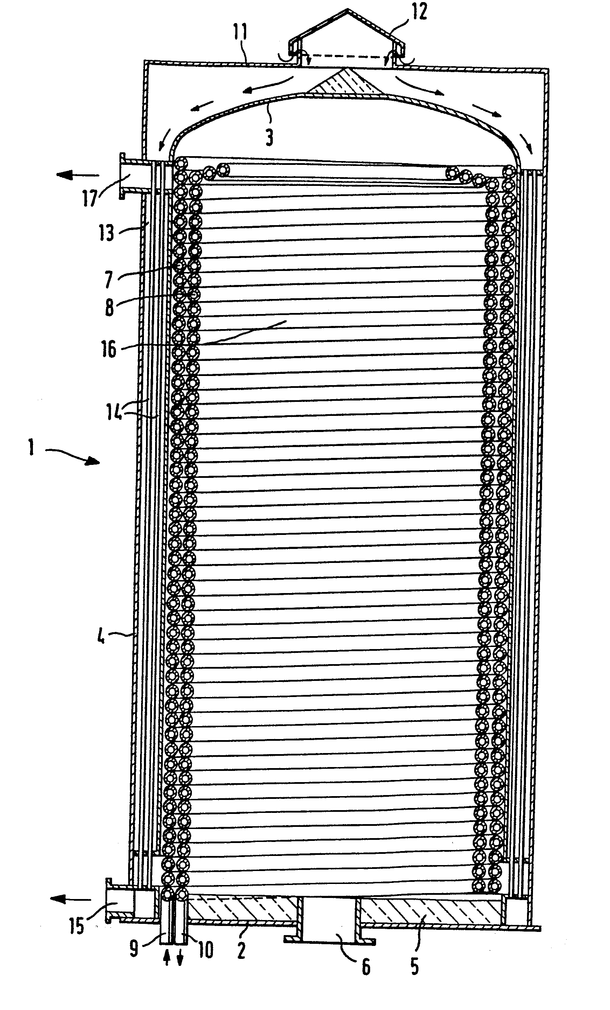

Im folgenden wird ein in der Zeichnung dargestelltes
Ausführungsbeispiel der Erfindung beschrieben;
die einzige Figur zeigt einen Vertikalschnitt durch
einen vertikalen Zwangsdurchlauferhitzer:

Der dargestellte Durchlauferhitzer besteht in seinem
grundsätzlichen Aufbau aus einem Gehäuse 1 mit

0136611

- 5 -

Boden 2, Deckel 3 und diese verbindendem Mantel 4.Der
Boden 2 besitzt eine feuerfeste Auskleidung 5 und
einen mittigen Stutzen 6 für die Zufuhr von Verbrennungsabgasen oder für den Einsatz eines Brenners.
Innenseitig am Mantel sind zwei konzentrisch zueinander
angeordnete, spiralig verlegte Rohrheizschlangen
7,8 vorgesehen, deren einzelne Lagen dicht an dicht
aufeinander gelegt sind. Die beiden Rohrheizschlangen
7,8 gehen im Bereich des Deckels 3 ineinander über.
Im Bereich des Bodens 2 besitzt die äußere Rohrheizschlange 7 einen Einlaß 9 für die zu erwärmende
Flüssigkeit und die Rohrheizschlange 8 einen Auslaß
10 für die erwärmte Flüssigkeit.

Das Gehäuse 1 ist unter einer Haube 11 angeordnet,
die sich bis zum Boden 2 des Gehäuses erstreckt.
Die Haube 11 weist oberhalb des Deckels 3 und über
dem Zentrum des Deckels 3 einen Verbrennungslufteinlaß 12 auf. Die angesaugte Verbrennungsluft strömt
durch den Verbrennungslufteinlaß zunächst auf den
zum Verbrennungslufteinlaß 12 hin gewölbten Deckel
3 und wird von diesem in Richtung auf einen zwischen
Haube 11 und Gehäuse 1 ausgebildeten Ringraum 13
gelenkt. Der Ringraum 13 besitzt Einbauten in Form
von Rohren 14, die sich vertikal, d.h. in Längsrichtung
des Mantels 4 erstrecken. Im Bereich des Bodens
befindet sich ein Verbrennungsluftauslaß 15, der
zu einem nicht dargestellten Ventilator führt,
welcher die erwärmte Verbrennungsluft auf kurzem
Wege dem ebenfalls nicht dargestellten Brenner
zuführt.

0136611

- 6 -

Die Verbrennungsabgase durchströmen den innerhalb
der Rohrheizschlangen 7,8 gebildeten Feuerraum
16 in vertikaler Richtung von unten nach oben und
verlassen den Feuerraum 16 durch einen im Bereich
des Deckels 3 angeordneten, den Ringraum 13 der
Haube 11 durchdringenden Auslaß 17. Sie geben damit
ihre fühlbare Wärme durch Strahlung an die durch
die innere Rohrheizschlange 8 fließende Flüssigkeit
ab. Die restliche Abgaswärme wird über den dünnwandigen
Deckel 3 an die einströmende Verbrennungsluft 12
abgegeben, die damit soweit aufgeheizt wird, daß
auch bei dem weiteren Weg der Verbrennungsluft
Unterkühlungen der davon beaufschlagten Wandungsteile
bis unter den Taupunkt mit Sicherheit vermieden
werden. Die in die Rohrheizschlange 7 eintretende
Flüssigkeit wird zunächst durch Konvektion vorgewärmt,
bevor sie in die innere Rohrheizschlange 8 eintritt.
Die im Bereich des Deckels 3 vorgewärmte Verbrennungsluft wird auf ihrem Wege durch den Ringraum 13
weiter erwärmt, bis sie den Verbrennungsluftauslaß
15 erreicht.

Besondere Wärmeisolationen sind bei diesem Durchlauferhitzer ebensowenig erforderlich wie ein dem Ventilator zugeordneter Ansaugschalldämpfer.

Ansprüche:

1. Durchlauferhitzer zur Erwärmung von Flüssigkeiten
   mit Hilfe von Verbrennungsabgasen, bestehend
   aus einem Gehäuse mit Mantel, Boden und Deckel,
   mit wenigstens einer im Bereich des Mantels
   spiralförmig verlegten Rohrheizschlange für
   die Flüssigkeit, sowie mit einem im Bodenbereich
   angeordneten Brenner, dem vorgewärmte Verbrennungsluft zugeführt wird, dadurch gekennzeichnet,
   daß das Gehäuse (1) in einer als Luftvorwärmer
   diendenden Haube (11) angeordnet ist, die oberhalb
   des Deckels (3) einen Lufteinlaß (12) und im·
   Bereich des Bodens (2) einen Luftauslaß (15)
   für die vorgewärmte, dem Brenner (6) zuzuführende
   Verbrennungsluft aufweist.

2. Durchlauferhitzer nach Anspruch 1, dadurch gekennzeichnet, daß der Lufteinlaß (12) über dem Zentrum
   des Deckels (3) angeordnet ist.

3. Durchlauferhitzer nach Anspruch 1 oder 2, dadurch
   gekennzeichnet, daß der Deckel (3) aus einem
   zum Lufteinlaß (12) hin gewölbten Blech besteht.

4. Durchlauferhitzer nach einem der Ansprüche 1
   bis 3, dadurch gekennzeichnet, daß zwischen
   Haube (11) und Mantel (4) ein Ringraum (13)
   gebildet ist.

Deutsche Bank AG Krefeld 103/1525 BLZ 32070080  ·  Sparkasse Krefeld 305722 BLZ 32050000  ·  Postscheck Essen 4055-431 BLZ 36010043

0136611

- 2 -

5. Durchlauferhitzer nach einem der Ansprüche 1 bis 4, dadurch gekennzeichnet, daß im Ringraum (13) luftführende Einbauten (14) angeordnet sind.

6. Durchlauferhitzer nach einem der Ansprüche 1 bis 5, dadurch gekennzeichnet, daß im Ringraum (13) Rohre (14) angeordnet sind, die sich in Längsrichtung des Mantels (4)erstrecken.

7. Durchlauferhitzer nach einem der Ansprüche 1 bis 6, dadurch gekennzeichnet, daß das Gehäuse (1) im Bereich des Deckels (3) einen die Haube (11) durchdringenden Auslaß (17) für die Verbrennungsabgase aufweist.

8. Durchlauferhitzer nach einem der Ansprüche 1 bis 7, gekennzeichnet durch zwei konzentrisch zueinander angeordnete spiralförmige Rohrheizschlangen (7,8) die im Bereich des Deckels (3) aneinander angeschlossen sind, wobei Einlaß (9) und Auslaß (10) für die Flüssigkeit im Bereich des Bodens (2) angeordnet sind.

9. Durchlauferhitzer nach Anspruch 8, dadurch gekennzeichnet, daß der Einlaß (9) in die äußere Rohrheizschlange (7) mündet.

0136611